# EUROPEAN PATENT APPLICATION

(11) **EP 4 488 397 A1**
(43) Date of publication of application: **08.01.2025**
(21) Application number: 23763431.6
(22) Date of filing: 28.02.2023
(51) Int. Cl.: C22C 21/02

(54) **ALUMINUM ALLOY FOR CASTING AND ALUMINUM ALLOY CASTING**

(30) Priority: 03.03.2022 JP 2022032697
(71) Applicant: Nippon Light Metal Company, Ltd., Tokyo 105-0004 (JP)
(72) Inventor: FUNADA, Suguru, Shizuoka-shi, Shizuoka 421-3203 (JP); ODA, Kazuhiro, Shizuoka-shi, Shizuoka 421-3203 (JP)
(74) Representative: Mewburn Ellis LLP
(86) International application number: PCT/JP2023/007263
(87) International publication number: WO 2023/167174

(57) **Abstract**

The present invention provides an aluminum alloy for casting, the aluminum alloy enabling the achievement of an Al-Si based alloy casting in which Al-(Fe, Mn, Cr)-Si crystallized products are miniaturized without being restricted by the casting method even if the Fe content is increased. The present invention also provides an aluminum alloy casting which has excellent proof stress, excellent ductility and excellent toughness at the same time even if the Fe content is increased, by reducing the influence of Fe that is contained therein as an impurity. An aluminum alloy for casting according to the present invention is characterized by containing more than 3.0% by mass but not more than 12.0% by mass of Si, 0.2% to 0.8% by mass of Fe, 0.1% to 0.7% by mass of Mn, 0.05% to 0.4% by mass of Cr and 0.05% to 0.3% by mass of V.

## Description

### TECHNICAL FIELD

The present invention relates to a eutectic Al-Si-based alloy for casting having excellent toughness and a casting material thereof.

### PRIOR ARTS

Al-Si-based alloys have good castability and the resulting casting materials exhibit excellent mechanical properties, and therefore have been used as alloys for casting. Here, there is a strong demand for lower prices for casting alloys, and the proportion of scrap material in the raw materials is higher compared to alloys for wrought materials. In addition, from the viewpoint of resource conservation and environmental protection, the number of aluminum alloy castings produced from recycled ingots has been increased.

However, Fe is easy to be mixed into the Al-Si-based alloy castings produced from recycled ingots as an impurity. Fe has the effect of preventing seizure to a mold during casting and improving tensile strength, but in case that the Fe content increases, coarse Al-Fe-Si-based crystals that become the starting point of fracture when stress is applied are more likely to be formed.

On the other hand, Mn and Cr are added to form Al-(Fe, Mn, Cr)-Si-based crystallized products, which are less likely to become coarse, instead of Al-Fe-Si-based crystallized products.

For example, Patent Literature 1 (JP 2006-322062 A) discloses an aluminum alloy for casting, which contains 2.0 to 6.0% by weight of Si, 0.1 to 1.5% by weight of Mg, 0.1 to 1.3% by weight of Cr, with the balance being Al and inevitable impurities, and which allows up to 0.8% by weight of Fe among the inevitable impurities.

In the aluminum alloy for casting described in Patent Literature 1, it is said that the blended ration of Si is set in the range of 2.0 to 6.0% by weight to suppress a decrease in elongation of the aluminum alloy, Cr is blended in an amount of 0.1 to 1.3% by weight to suppress a decrease in elongation of the alloy while preventing seizure between the aluminum alloy and a die during casting even when the casting temperature is high, and Mg is blended in an amount of 0.1 to 1.5% by weight to suppress a decrease in elongation while improving the proof stress of the aluminum alloy.

Further, Patent Literature 2 (JP 2020-158788 A) discloses an aluminum alloy which contains, based on 100% by mass in total, 7 to 10% Si, 0.3 to 0.9% Fe, 0.05 to 0.3% V, 0.05 to 0.3% Zr, 0.05 to 0.3% Ti, with the balance being Al and impurities.

In the aluminum alloy described in the above Patent Literature 2, it is said that, by coexistence (composite addition) of Zr and Ti, a fine Fe-based compound disperses nearly uniformly on the periphery of the Al matrix to crystallize, and accordingly, a die-cast product of the aluminum alloy exhibits high strength and high ductility without need for heat treatment.

### CITATION LIST

### Patent Literature

Patent Literature 1: JP 2006-322062A
Patent Literature 2: JP 2020-158788A

### SUMMARY OF INVENTION

### Technical Problem

In the aluminum alloy for casting described in the above Patent Literature 1, it is said that by adding 0.1 to 1.3% by weight of Cr, Fe-based compounds are converted into an Al-Si-Cr-Fe phase, and by forming the Fe-based compounds in such a form, it is possible to reduce the decrease in elongation and at the same time prevent seizure to a mold during casting. However, the elongation and toughness cannot be sufficiently ensured by only making the Fe-based compounds into the Al-Si-Cr-Fe phase. In particular, in the case of a die-cast material in which the structure containing the Al-Si-Cr-Fe phase is not easily refined, this problem becomes more remarkable.

In addition, in the aluminum alloy described in Patent Literature 2, it is said that, since most of V and Zr are discharged to the outer periphery of the a-Al and are concentrated in the outer periphery of the a-Al, the Fe-based compounds are finely dispersed in the outer periphery of the a-Al. However, this mechanism means that segregation of brittle Fe-based compounds to the crystalline grain boundaries of the a-Al is promoted, and thus the network structure of the brittle phase reduces the toughness of the aluminum alloy castings.

If the area of the crystalline grain boundary can be increased by refining the a-Al and, in addition thereto, the formed amount of Fe-based compounds can be sufficiently reduced, the mechanical properties of the aluminum alloy castings can be ensured, however, applicable casting conditions are significantly limited. Further, the examples in Patent Literature 2 only show die-cast materials, and it is difficult to impart high strength, proof stress, and ductility to the aluminum alloy castings obtained by general casting methods such as sand casting and metal mold casting.

In view of the problems in the prior arts as described above, an object of the present invention is to provide an aluminum alloy for casting in which the Al-(Fe, Mn, Cr)-Si-based crystallized products in the resulting Al-Si-based alloy castings are refined, even when the Fe content is increased, without being limited by the casting method. Further, another object of the present invention is to provide an aluminum alloy castings having excellent proof stress, ductility and toughness even when the Fe content is increased by reducing the effect of Fe contained as an impurity.

In addition, the other objects of the present invention are to reduce the adverse effects of Fe, which is likely to be mixed in from scrap, and accordingly, to provide an aluminum for casting and an aluminum alloy casting that are suitable for horizontal recycling, and the like.

### Solution to Problem

In order to accomplish the above objects, the present inventors have conducted intensive research as to the composition of the Fe-containing aluminum alloys for casting, and as a result, have found that addition of Mn, Cr and V in combination to a hypoeutectic Al-Si alloy is extremely effective, and then have reached the present invention.

Namely, the present invention provides an aluminum alloy for casting characterized by containing
more than 3.0% by mass and not more than 12.0% by mass of Si,
0.2% to 0.8% by mass of Fe,
0.1% to 0.7% by mass of Mn,
0.05% to 0.4% by mass of Cr and
0.05% to 0.3% by mass of V.

Fe contributes to preventing seizure to a mold during casting and to improving the tensile strength of the aluminum alloy castings, however, when the Fe content increases, coarse Al-Fe-Si-based crystallized products that become the starting point of fracture when stress is applied are more likely to be formed. To the contrary, since Mn and Cr are added to the aluminum alloy for casting of the present invention, the Al-(Fe, Mn, Cr)-Si-based crystallized products, which are less likely to become coarse, are formed instead of Al-Fe-Si-based crystallized products.

The greatest characteristic of the casting aluminum alloy of the present invention is that the addition of V results in the formation of a fine VSi₂-based compound. The VSi₂-based compound acts as solidification nuclei to form a fine CrSi₂, and then Al₁₃Si₄Cr₄ is formed by a peritectic reaction, and finally the Al₁₃Si₄Cr₄ is acts as solidification nuclei to form fine Al-(Fe, Mn, Cr)-Si-based crystallized product. That is, the formation of the fine VSi₂-based compound acts as a trigger to accomplish remarkable refinement of Al-(Fe, Mn, Cr)-Si-based crystallized product.

Although Fe forms brittle compounds and basically reduces the toughness of the aluminum alloys, when adding 0.2 to 0.8% by mass of Fe, due to the remarkable effect of refining Al-(Fe, Mn, Cr)-Si-based crystallized product by the VSi₂-based compound, the adverse effect of Fe on the mechanical properties of Al-Si -based alloy castings can be completely neutralized. As a result, the recycled Al-Si-based alloy ingot containing Fe as an impurity can be used as a raw material.

Further, in the aluminum alloy for casting of the present invention, it is preferable to contain 0.2 to 2.0% by mass of Cu, more than 0.2% by mass and not more than 1.0% by mass of Mg, any one or more of 0.005 to 0.05% by mass of Sr, 0.005 to 0.05% by mass of Sb and 0.005 to 0.25% by mass of Ti, with the balance being Al and inevitable impurities.

By containing 0.2 to 2.0% by mass of Cu, it is possible to increase the strength of the aluminum alloy castings due to solid solution strengthening and age hardening. Further, by coexisting with Si, it is possible that Mg contributes to age hardening, and by containing more than 0.2% by mass and not more than 1.0% by mass of Mg, it is possible to increase the strength of the aluminum alloy castings.

Further, Sr and Sb have the effect of refining the eutectic Si, and this effect becomes significant at 0.005% by mass or more, but even when added 0.05% by mass or more, no improvement in this effect can be obtained. Ti has the effect of refining the cast structure (a phase), and this effect becomes significant at 0.005% by mass or more, but even when added 0.25% by mass or more, no improvement in this effect can be obtained.

The present invention also provides an aluminum alloy for casting, characterized by containing:
5.0 to 8.0% by mass of Si,
0.2 to 0.6% by mass of Fe,
0.1 to 0.3% by mass of Mn,
0.1 to 0.3% by mass of Cr,
0.05 to 0.2% by mass of V,
0.2 to 1.0% by mass of Cu,
0.2 to 0.6% by mass of Mg,
0.005 to 0.05% by mass of Sr, and
0.005 to 0.25% by mass of Ti,
with the balance being Al and inevitable impurities.

By strictly controlling the composition of the aluminum alloy for casting as described above, it is possible to more reliably realize remarkable refinement of the Al-(Fe, Mn, Cr)-Si-based crystallized product, triggered by the formation of the fine VSi₂-based compound. Further, it is possible to exhibit efficiently the increase of the strength of the aluminum alloy castings due to the addition of Cu and Mg, the refinement of the eutectic Si due to the addition of Sr, and the refinement of the cast structure (a phase) due to the addition of Ti. As a result, even if the Fe content is increased, it is possible to obtain an optimal aluminum alloy for casting in which the Al-(Fe, Mn, Cr)-Si-based crystallized product in the resulting aluminum alloy castings is refined, without being limited by the casting method.

Furthermore, the present invention provides an aluminum alloy castings comprising the aluminum alloy for casting of the present invention.

Since the aluminum alloy casting of the present invention is made of the aluminum alloy for casting of the present invention, and the influence of Fe contained as an impurity is reduced, even when the Fe content is increased, it is possible to exhibit excellent proof stress, ductility and toughness. Here, the aluminum alloy castings of the present invention means a casting produced by various conventionally known casting methods (sand casting, metal mold casting, gravity casting, low pressure casting, die casting, and the like), and is not limited to one casting produced by a specific casting method.

In the aluminum alloy casting of the present invention, it is preferable that the mode of the length of the iron-based compound is 12.5 µm or less. By refining the iron-based compound such as the Al-(Fe, Mn, Cr)-Si-based crystallized product and setting the mode of length to 12.5 µm or less, it is possible to impart excellent ductility and toughness to the aluminum alloy castings. Further, it is preferable that the iron-based compound contains V. By containing V in the Al-(Fe, Mn, Cr)-Si-based crystallized product, the refinement effect caused by the formation of VSi₂-based compound can be reliably achieved.

In the aluminum alloy castings of the present invention, it is preferable that a tensile elongation is 4% or more. When the aluminum alloy castings has a tensile elongation of 4% or more, it is possible to suitably use in applications where reliability is required.

### EFFECT OF THE INVENTION

According to the present invention, it is possible to provide an aluminum alloy for casting in which the Al-(Fe, Mn, Cr)-Si-based crystallized products in the resulting Al-Si-based alloy castings are refined, even when the Fe content is increased, without being limited by the casting method. Further, it is also possible to provide an aluminum alloy casting having excellent proof stress, ductility and toughness even when the Fe content is increased by reducing the effect of Fe contained as an impurity.

### BRIEF DESCRIPTION OF THE DRAWINGS

FIG. 1 shows the microstructure of the present aluminum alloy castings 1.
FIG. 2 shows the microstructure of the present aluminum alloy castings 2.
FIG. 3 shows the microstructure of the comparative aluminum alloy castings 1.
FIG. 4 shows the microstructure of the comparative aluminum alloy castings 2.
FIG. 5 shows the microstructure of the comparative aluminum alloy castings 3.
FIG. 6 shows the microstructure of the comparative aluminum alloy castings 4.
FIG. 7 is a histogram showing the length distribution of the iron-based compound in the present aluminum alloy castings 1.
Fig. 8 is an elemental mapping of the present aluminum alloy castings 1.

### Embodiments for achieving the invention

The aluminum alloy for casting and the aluminum alloy castings of the present invention will be described in detail below, but the present invention is not limited thereto.

### 1. Aluminum alloy for casting

The aluminum alloy for casting of the present invention is characterized by the combined addition of Mn, Cr and V to the hypoeutectic Al-Si alloy. Each component will be described in detail below.

### (1) Essential additive elements

### Si: More than 3.0% by mass and not more than 12.0% by mass

Si has the effect of improving the castability of the aluminum alloy, and, in addition, the effect of improving mechanical properties such as tensile strength. The effect becomes significant when more than 3.0% by mass, but when added more than 12.0% by mass, the eutectic Si crystals and the primary Si crystals tend to become coarse, resulting in decrease in mechanical properties. The added amount of Si is preferably set to 5.0 to 10.0% by mass, and more preferably set to 5.0 to 8.0% by mass.

### Fe: 0.2 to 0.8% by mass

Fe has the effect of improving the mechanical properties such as tensile strength of the aluminum alloys, and also has the effect of suppressing seizure onto the mold during casting. The effect becomes significant when 0.2% by mass or more, but when more than 0.8% by mass, the Al-(Fe, Mn, Cr)-Si-based crystallized product tend to become coarse.

Further, when the aluminum alloy for casting of the present invention is produced mainly from recycled ingots, Fe is contained in an amount of 0.2% by mass or more as an impurity. Here, by setting the Fe content to 0.8% by mass or less, the adverse effects of Fe on mechanical properties can be reliably neutralized in the aluminum alloy castings made from the aluminum alloy for casting of the present invention.

It is preferable that the Fe content is set to 0.2 to 0.6% by mass. By setting the Fe content to 0.2 to 0.6% by mass, it is possible to fully exhibit the effects of improving the strength and proof stress of the aluminum alloy castings and suppressing seizure to a die, while reliably suppressing the adverse effects of Fe (reduction in ductility and toughness).

### Mn: 0.1 to 0.7% by mass

Mn crystallizes as the fine Al-(Fe, Mn, Cr)-Si-based crystallized product and suppresses the formation of the coarse Al-Fe-Si-based crystallized product. The effect becomes significant when the content is 0.1% by mass or more, but when added more than 0.7% by mass, the coarse Mn-based compound is likely to be formed. The Mn content is preferably set to 0.2 to 0.4% by mass, and more preferably set to 0.2 to 0.3% by mass.

### Cr: 0.1 to 0.4% by mass

Cr crystallizes as the fine Al-(Fe, Mn, Cr)-Si-based crystallized product and suppresses the formation of the coarse Al-Fe-Si-based crystallized product. The effect becomes significant when the content is 0.1% by mass or more, but when added more than 0.4% by mass, the coarse Cr-based compound is likely to be formed. The Cr content is preferably set to 0.1 to 0.3% by mass, and more preferably set to 0.1 to 0.2% by mass.

### V: 0.05 to 0.3% by mass

The addition of V results in the formation of the fine VSi₂-based compound, and promoting the formation and refinement of the Al-(Fe, Mn, Cr)-Si-based crystallized product. Specifically, the VSi₂-based compound acts as solidification nuclei to form a fine CrSi₂, and then Al₁₃Si₄Cr₄ is formed by a peritectic reaction, and finally the Al₁₃Si₄Cr₄ is acts as solidification nuclei to form fine Al-(Fe, Mn, Cr)-Si-based crystallized product. The effect becomes significant at 0.05% by mass or more, but no improvement in effect is observed even when added more than 0.3% by mass.

### (2) Optional Added Elements

### Cu: 0.2 to 2.0% by mass

By adding Cu, it is possible to increase the strength of the aluminum alloy castings due to solid solution strengthening and age hardening. The effect becomes significant when the content is 0.2% by mass or more, but when added more than 2.0 mass %, the coarse compound is formed to reduce ductility and in addition, corrosion resistance is also reduced. The added amount of Cu is preferably set to 0.2 to 1.0% by mass.

### Mg: more than 0.2% by mass and less than 1.0% by mass

By allowing Mg to coexist with Si, which is the essential additive element, it is possible to improve the strength of the aluminum alloy castings through age hardening. By setting the added amount of Mg to more than 0.2% by mass, the effect can be sufficiently exhibited, and by setting to 1.0% by mass or less, the decrease in toughness can be suppressed. The added amount of Mg is preferably set to 0.2 to 0.6% by mass.

### Sr: 0.005 to 0.05% by mass

Sr has the effect of refining eutectic Si. The effect becomes significant at 0.005% by mass or more, but no improvement in effect is observed when adding more than 0.05% by mass.

### Sb: 0.005 to 0.05% by mass

Sb has the effect of refining eutectic Si. The effect becomes significant at 0.005% by mass or more, but no improvement in effect is observed when adding more than 0.05% by mass.

### Ti: 0.005 to 0.25% by mass

Ti has the effect of refining the cast structure (a phase). The effect becomes significant at 0.005% by mass or more, but no improvement in effect is observed when adding more than 0.25% by mass. Note, at the time when Ti is added, an Al-Ti-B alloy may be used. At that time, it is necessary that the amount of B is set to 0.05% by mass or less.

### (3) Inevitable impurities

It is preferable to restrict the contents of Ni, Zn, Pb, Be and Sn as inevitable impurities to 0.05% by mass or less. The other elements are preferably restricted to 0.01% by mass or less.

### 2. Aluminum alloy castings

The aluminum alloy castings of the present invention is made of the aluminum alloy for casting of the present invention and is characterized in that the iron-based compound is finely divided. The microstructure and mechanical properties will be described in detail below.

### (1) Metal structure

In the aluminum alloy castings of the present invention, the most frequent length of the iron-based compound such as Al-(Fe, Mn, Cr)-Si-based crystallized product is 12.5 µm or less. By setting the mode of the length of the iron-based compound to 12.5 µm or less, it is possible to fully realize the reduction of the mechanical properties of the aluminum alloy casting caused by the iron-based compound. It is more preferable that the mode of the length of the iron-based compound is set to 10 µm or less.

The method for measuring the mode of the length of the iron-based compound is not particularly limited, and various conventionally known microstructural observation methods may be used, and, for example, a backscattered electron image of a scanning electron microscope (SEM) may be used to measure the length distribution of the iron-based compound with an appropriate image analysis software. The observation field area is preferably set to 1.5 mm² or more.

In addition, since the iron-based compound in the aluminum alloy castings of the present invention is refined by the formation of VSi₂-based compound, it is preferable that V exists inside the iron-based compound. By containing V in the iron-based compound, the refinement effect caused by the formation of VSi₂-based compound can be reliably achieved.

The method for confirming the V present inside the iron-based compound is not particularly limited, and various conventionally known elemental analysis methods may be used, and, for example, the V can be confirmed by SEM-EDS, EPMA, TEM-EDS, STEM-EDS, and the like.

### (2) Mechanical Properties

The aluminum alloy castings of the present invention has excellent tensile properties that combine high strength, proof stress and ductility.

It is preferable that the tensile elongation is 4% or more.
Further, the tensile strength is preferably 230 MPa or more, and the 0.2% proof stress is preferably 170 MPa or more.

### (3) Production method

The aluminum alloy castings of the present invention can be produced by preparing raw materials so that they have the composition of the aluminum alloy for casting of the present invention, and casting according to various conventionally known casting methods (sand casting, metal mold casting, gravity casting, low-pressure casting, die casting, and the like). That is, the aluminum alloy castings of the present invention is not limited to those produced by a specific casting method.

Further, since the aluminum alloy castings of the present invention has less influence of Fe contained as an impurity, it is possible to exhibit excellent proof stress, ductility and toughness even when the Fe content is increased. That is, the proportion of scrap materials in the raw materials may be high, and from the perspective of building a sustainable society, recycled metals can be suitably used.

Although representative embodiments of the present invention have been described above, the present invention is not limited to these, and various design changes are possible, and all such design changes are included in the technical scope of the present invention.

### EAMPLE

### «Example 1»

Raw materials mixed to obtain the composition (% by mass) shown as Example 1 in Table 1 were placed in a graphite crucible and melted in air at 750°C, and thereafter, a degassing process was carried out at 750°C by using a rotary-type degassing apparatus. Next, the material was cast into a boat-shaped shape (JIS H 5202) according to the gravity casting method at a casting temperature of 720°C. Next, T7 tempering (solution treatment and stabilization treatment) was carried out to obtain a present aluminum alloy castings 1 of the present invention.

**[Table 1]**

| | Si | Fe | Cu | Mg | Mn | Cr | V | Sr | Al |
|---|---|---|---|---|---|---|---|---|---|
| Ex.1 | 7.1 | 0.42 | 0.71 | 0.35 | 0.20 | 0.15 | 0.10 | 0.006 | bal. |
| Ex.2 | 7.1 | 0.40 | 0.59 | 0.34 | 0.21 | 0.15 | 0.11 | - | bal. |
| Com.Ex.1 | 7.0 | 0.12 | 0.72 | 0.31 | < 0.01 | < 0.01 | 0.01 | 0.007 | bal. |
| Com.Ex.2 | 7.0 | 0.41 | 0.72 | 0.32 | <0.01 | <0.01 | 0.01 | 0.005 | bal. |
| Com.Ex.3 | 7.0 | 0.42 | 0.60 | 0.35 | 0.22 | <0.01 | - | - | bal. |
| Com.Ex.4 | 7.1 | 0.41 | 0.59 | 0.33 | 0.20 | 0.16 | - | - | bal. |

### «Example 2»

Present aluminum alloy castings 1 of the present invention was obtained in the same manner as in Example 1, except that raw materials mixed to obtain the composition shown as Example 2 in Table 1 were used, and no tempering was carried out.

### «Comparative Example 1»

Comparative aluminum alloy castings 1 was obtained in the same manner as in Example 1, except that raw materials mixed to obtain the composition shown as Comparative Example 1 in Table 1 were used.

### «Comparative Example 2»

Comparative aluminum alloy castings 2 was obtained in the same manner as in Example 1, except that raw materials mixed to obtain the composition shown as Comparative Example 2 in Table 1 were used.

### «Comparative Example 3»

Comparative aluminum alloy castings 3 was obtained in the same manner as in Example 1, except that raw materials mixed to obtain the composition shown as Comparative Example 3 in Table 1 were used, and no tempering was carried out.

### «Comparative Example 4»

Comparative aluminum alloy castings 4 was obtained in the same manner as in Example 1, except that raw materials mixed to obtain the composition shown as Comparative Example 4 in Table 1 were used, and no tempering was carried out.

### [Evaluation Test]

### (1) Microstructure

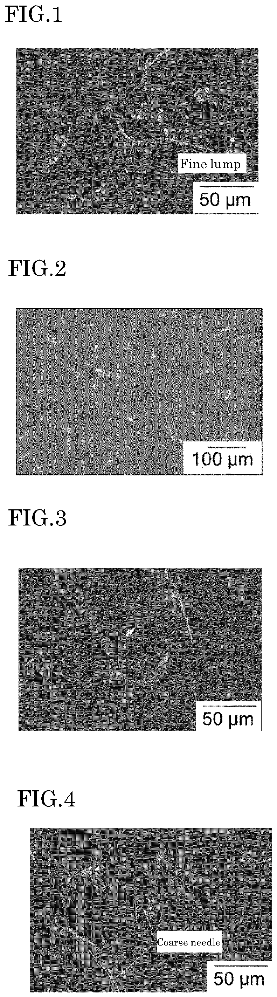

Cubes of 1 cm square were cut out from the present aluminum alloy castings and the comparative aluminum alloy castings, so as to be a manner that a position 13 mm from the bottom surface was centered, and the cross sections were buffed to prepare samples for microstructure observation. The microstructures of the present aluminum alloy castings 1 and 2 observed with a scanning electron microscope (SEM) are shown in FIG. 1 and FIG. 2, respectively. Further, the microstructures obtained for the comparative aluminum alloy castings 1 to 4 are shown in FIGS. 3 to 6, respectively. Note, the scanning electron microscope used was ULTRA Plus model available from Carl Zeiss.

The bright (white) parts observed in FIGS. 1 to 6 are iron-based compounds, it is confirmed that the parts are in the form of fine lumps in the present aluminum alloy castings. Further, the finely divided iron-based compounds are not distributed continuously. On the other hand, in the comparative aluminum alloy castings, the iron-based compounds are coarse and needle-like, and it is confirmed that, with regard to the addition of Mn, Cr and V, when only Mn was added (comparative aluminum alloy casting 3) and when only Mn and Cr were added (comparative aluminum alloy casting 4), the iron-based compounds were hardly refined. From these results, it is clear that the combined addition of Mn, Cr and V is essential for refining the iron-based compounds.

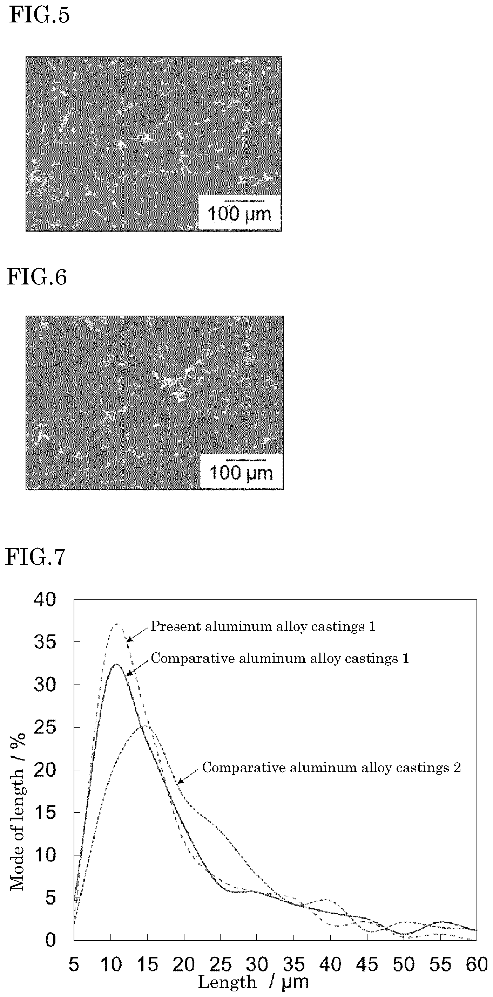

With respect to the present aluminum alloy castings 1, the comparative aluminum alloy castings 1 and the comparative aluminum alloy castings 2, the distribution of lengths of iron-based compounds was evaluated from SEM backscattered electron images. Specifically, the field area was set to 1.77 mm², the threshold value was set to area > 10 µm², and the class width was set to 5 µm, and a histogram of the length distribution of iron-based compounds was obtained. The resulting histogram is shown in FIG. 7.

Comparing the present aluminum alloy castings 1 and the comparative aluminum alloy castings 2, which have approximately the same Fe content, the mode of length of the iron-based compounds in the comparative aluminum alloy casting 2 is 15 µm, whereas that in the present aluminum alloy castings 1 is 10 µm, which shows that the iron-based compounds are significantly refined by the combined addition of Mn, Cr, and V. Further, the Fe content of the comparative aluminum alloy castings 1 is low at 0.12% by mass, and coarsening of the iron-based compounds does not progress, but the iron-based compounds of the present aluminum alloy castings 1, which contains 0.42% by mass of Fe, are refined to the same extent as those of the comparative aluminum alloy casting 1.

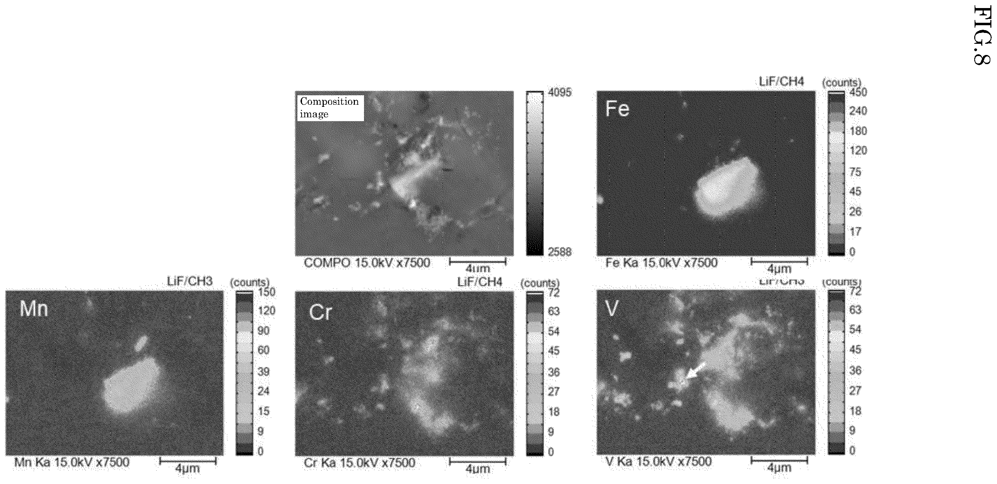

The distribution of elements in the present aluminum alloy castings 1 was measured by using SEM-EDS. The obtained elemental mapping is shown in FIG. 8. The iron-based compound is present in the center of FIG. 8, and the fine region (regions indicated by arrows in the drawing) where V is concentrated is observed inside the iron-based compound. The V is due to the formation of VSi₂-based compounds.

## Claims

1. An aluminum alloy for casting **characterized by** containing: more than 3.0% by mass and not more than 12.0% by mass of Si,
0.2% to 0.8% by mass of Fe,
0.1% to 0.7% by mass of Mn,
0.05% to 0.4% by mass of Cr and
0.05% to 0.3% by mass of V.

2. The aluminum alloy for casting according to claim 1, **characterized by** containing:
0.2 to 2.0% by mass of Cu, more than 0.2% by mass and not more than 1.0% by mass of Mg,
any one or more of 0.005 to 0.05% by mass of Sr, 0.005 to 0.05% by mass of Sb and 0.005 to 0.25% by mass of Ti,
with the balance being Al and inevitable impurities.

3. An aluminum alloy for casting **characterized by** containing:
5.0 to 8.0% by mass of Si,
0.2 to 0.6% by mass of Fe,
0.1 to 0.3% by mass of Mn,
0.1 to 0.3% by mass of Cr,
0.05 to 0.2% by mass of V,
0.2 to 1.0% by mass of Cu,
0.2 to 0.6% by mass of Mg,
0.005 to 0.05% by mass of Sr, and
0.005 to 0.25% by mass of Ti,
with the balance being Al and inevitable impurities.

4. The aluminum alloy castings comprising the aluminum alloy for casting according to claims 1 or 2.

5. The aluminum alloy castings according to claim 4, wherein the mode of length of iron-based compound is 12.5 µm or less.

6. The aluminum alloy castings according to claim 5, wherein the iron-based compound contains V.

7. The aluminum alloy castings according to claim 4, which has a tensile elongation of 4% or more.
